# EUROPÄISCHE PATENTSCHRIFT

(11) **EP 4 283 140 B1**
(45) Veröffentlichungstag und Bekanntmachung des Hinweises auf die Patenterteilung: **06.11.2024**
(21) Anmeldenummer: 23162111.1
(22) Anmeldetag: 15.03.2023
(51) Int. Cl.: F16B 15/00

(54) **BEFESTIGUNGSELEMENT AUS HOLZ UND/ODER HOLZWERKSTOFFEN**
FASTENING ELEMENT MADE OF WOOD AND/OR WOODEN MATERIALS
ELÉMENT DE FIXATION EN BOIS ET/OU EN MATÉRIAUX DÉRIVÉS DU BOIS

(30) Priorität: 24.05.2022 DE 102022113140
(43) Veröffentlichungstag der Anmeldung: 29.11.2023
(73) Patentinhaber: BAUSSMANN Collated Fasteners GmbH, 57413 Finnentrop (DE)
(72) Erfinder: Baußmann, Winfried, 57413 Finnentrop (DE)
(74) Vertreter: Ostriga Sonnet Wirths & Vorwerk

(56) Entgegenhaltungen:
- EP-A1- 4 027 026
- EP-A1- 4 276 319
- WO-A1-2018/172031
- DE-A1- 102018 121 065

## Beschreibung

Die Erfindung betrifft ein Befestigungselement aus Holz und/oder Holzwerkstoffen zum Verbinden von mindestens zwei, wenigstens teilweise aus Holz bestehenden Bauteilen, bestehend aus einem Schaft und einem wenigstens teilweise am Schaft angeordneten sich verjüngenden Bereich.

Ein derartiger Stand der Technik ist beispielsweise aus der DE 10 2015 107 371.4 bekannt, in der eine als kegelförmige Rundspitze ausgebildete Nagelspitze offenbart ist.

Diese Spitzengeometrie hat - wie die Praxis gezeigt hat - den Nachteil, dass sie sich beim Einschießen in ein hölzernes Bauteil verformt oder sogar abbricht, wodurch ein gradliniges Eintreiben des Holznagels verhindert wird. Durch dieses sogenannte "Verlaufen" des Holznagels beim Eintreibvorgang in die zu verbindenden Holzbauteile verringert sich jedoch die Eintreibgeschwindigkeit, so dass es nicht zuverlässig zu einer ligninbasierten Verschweißung des Nagels mit den zu verbindenden Holzbauteilen kommt, sondern oft nur eine reibschlüssige Verbindung (Verklemmung) erreicht wird.

Darauf basierend hat die Anmelderin in der DE 10 2018 121 065 eine die oben genannten Nachteile nicht aufweisende Spitzengeometrie geschaffen, bei der die Nagelspitze eine im Wesentlichen ballistische Form hat, kürzer als das 1 ,3-fache des Nageldurchmessers ist und an ihrem freien Ende abgerundet ausgebildet ist. Diese Spitzengeometrie hat den Vorteil, dass sie sich beim Eintreibvorgang in die zu verbindenden Holzbauteile nicht verformt oder abbricht und deshalb geradlinig eingetrieben wird.

Bei dieser Spitzengeometrie erhöht sich allerdings ebenfalls der Eintreibwiderstand, so dass bei dem Eintreibvorgang in die Holzbauteile sich die Eintreibgeschwindigkeit derart verringert, dass es nicht zuverlässig zu einer ligninbasierten Verschweißung zwischen dem hölzernen Befestigungselement und den Holzbauteilen kommt.

Letztlich ist in der DE 10 2017 100 753 ein Verfahren zur Befestigung eines zellulosebasierten Bauteils mit einem Bauteil aus einem anderen Material beschrieben. Konkret ist dort offenbart, das sogenannte Gipsfaserplatten (Fermacell^{®}) mit Holznägeln, deren Nagelspitzen als kegelförmige Rundspitzen ausgebildet sind, an einer Holzkonstruktion mittels eines Druckluftnaglers befestigt werden. Auch hier haben Versuche gezeigt, dass es insbesondere in den Gipsfaserplatten nicht zuverlässig zu einer ligninbasierten Verschweißung, sondern nur zu einer reibschlüssigen Verbindung (Verklemmung) kommt.

Ergänzend wird im Zusammenhang auf den Stand der Technik auch auf die Druckschriften EP 4 276 319 A1 und auf die EP 4 027 026 A1, die zum Stand der Technik gemäß Artikel 54(3) EPÜ gehören, sowie auf die WO 2018/172031 A1 hingewiesen. Das zuletzt zitierte Dokument offenbart einen Nagel, der aus lignocellulosischem Material besteht. Die Nagelspitze ist kegelförmig ausgebildet und der Spitzenwinkel beträgt 90°.

Ausgehend von dem zuletzt genannten Stand der Technik besteht die Aufgabe der Erfindung darin, ein neues Befestigungselement aus Holz und/oder Holzwerkstoffen zum Verbinden von mindestens zwei, wenigstens teilweise aus Holz bestehenden Bauteilen zu schaffen, mit denen ein geradliniges Eintreiben bei gleichzeitig relativ geringem Eintreibwiderstand sowie hoher Eintreibgeschwindigkeit möglich ist, damit es auf zuverlässige Weise zu einem ligninbasierten Verschweißen zwischen Befestigungselement und den zu verbindenden Bauteilen kommt.

Die Lösung der Aufgabe ergibt sich aus dem Gegenstand mit den Merkmalen des Anspruchs 1.

Diese erfindungsgemäße Ausgestaltung der Spitze des neuen Befestigungselementes aus Holz und/oder Holzwerkstoffen hat zunächst den wesentlichen Vorteil, dass sich die Spitze nicht verformt und damit auch nicht abbricht, wodurch ein geradliniges Eintreiben insbesondere in langsam gewachsene Hölzer (mit hoher Dichte), zum Beispiel nordische Fichte, nordische Kiefer sowie sibirische Lärche möglich ist.

Durch die erfindungsgemäße Spitzengeometrie ist darüber hinaus der Eintreibwiderstand deutlich verringert, wodurch das Befestigungselement geradlinig (richtungsstabil) in ein wenigstens teilweise aus Holz bestehendes Bauteil eingetrieben werden kann und nicht "verläuft". Hinzu kommt, dass durch den geringen Eintreibwiderstand die Eintreibgeschwindigkeit bis zum Ende des Eintreibvorgangs relativ hoch ist, wodurch es zuverlässig zu einer ligninbasierten Verschweißung des hölzernen Befestigungselements mit den zu verbindenden wenigstens teilweise aus Holz bestehenden Bauteilen kommt.

Bei einer vorteilhaften Ausführungsform der Erfindung beträgt die Konizität der Reibflächen des konisch zulaufenden Segmentes zwischen 5 und 20 Grad zur Längsmittelachse des Befestigungselements.

Eine weitere erfindungsgemäße Ausführungsform ist dadurch gekennzeichnet, dass der maximale Durchmesser des eine Spitze aufweisenden Segments das 0,7-fache des Schaftdurchmessers beträgt.

Wesentlich ist auch bei einer weiteren Ausführungsform, dass das konisch zulaufende Segment des sich verjüngenden Bereiches bei einer Länge des Befestigungselements von 50 mm zwischen 5 und 10 mm beträgt.

Letztlich ist es möglich, dass das erfindungsgemäße Befestigungselement einen Kopf aufweist, dessen Durchmesser gegenüber dem Schaft erweitert ist.

Weitere Vorteile der Erfindung ergeben sich aus den nachfolgenden Unteransprüchen sowie aus der Beschreibung mehrerer Ausführungsbeispiele.
- Figur 1: Schnittdarstellung einer ersten Ausführungsform,
- Figur 2: Schnittdarstellung einer zweiten Ausführungsform,
- Figur 3: Schnittdarstellung einer dritten Ausführungsform,
- Figur 4: Schnittdarstellung einer vierten Ausführungsform und
- Figur 5: Schnittdarstellung einer fünften Ausführungsform.

In den Zeichnungen ist ein Befestigungselement aus Holz und/oder Holzwerkstoffen insgesamt mit der Bezugsziffer 10 bezeichnet.

Das Befestigungselement 10 weist einen Schaft 11, einen sich verjüngenden Bereich 12 und einen freien Endbereich 13 auf, auf den beim Eintreiben die Schlagenergie einwirkt. Das Befestigungselement 10 hat eine Länge l von 50 mm.

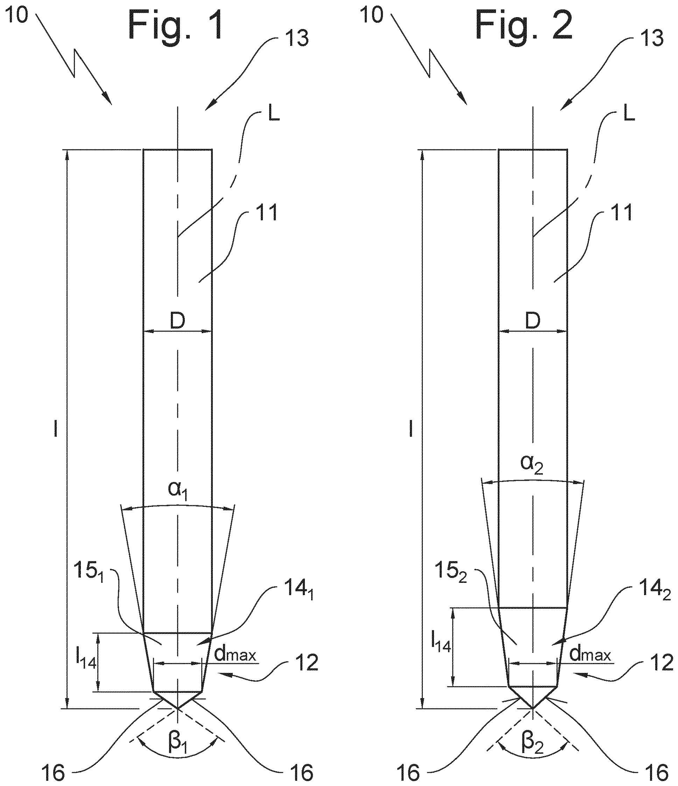

Der sich verjüngende Bereich 12 der Ausführungsform gemäß Figur 1 weist zunächst ausgehend vom Schaft 11 ein konisch zulaufendes Segment 14₁ auf, wobei der Konuswinkel α₁ in Bezug zur Längsmittelachse L 20° bei einer Länge l₁₄ beträgt.

An das konisch zulaufende Segment 14₁ schließt sich ein weiteres, die Spitze ausbildendes Segment 15₁ an, welches zusammen mit dem konisch zulaufenden Segment 14₁ den sich verjüngenden Bereich 12 ausbildet. Umlaufende Seitenflächen 16 des weiteren Segments 15₁ stehen in einem Winkel β₁ von 110° zueinander.

Letztlich beträgt der maximale Durchmesser dₘₐₓ des weiteren Segmentes 15₅das 0,7-fache des Schaftdurchmessers D.

Die Figur 2 zeigt wiederum das Befestigungselement 10 mit dem grundsätzlich vorbeschriebenen Aufbau, wobei jedoch im Unterschied zu der Ausführungsform gemäß Figur 1 der Konuswinkel α₂ nur 15° und der Winkel β₂ zwischen den Seitenflächen 16 des weiteren Segmentes 15₂ nur 95° beträgt.

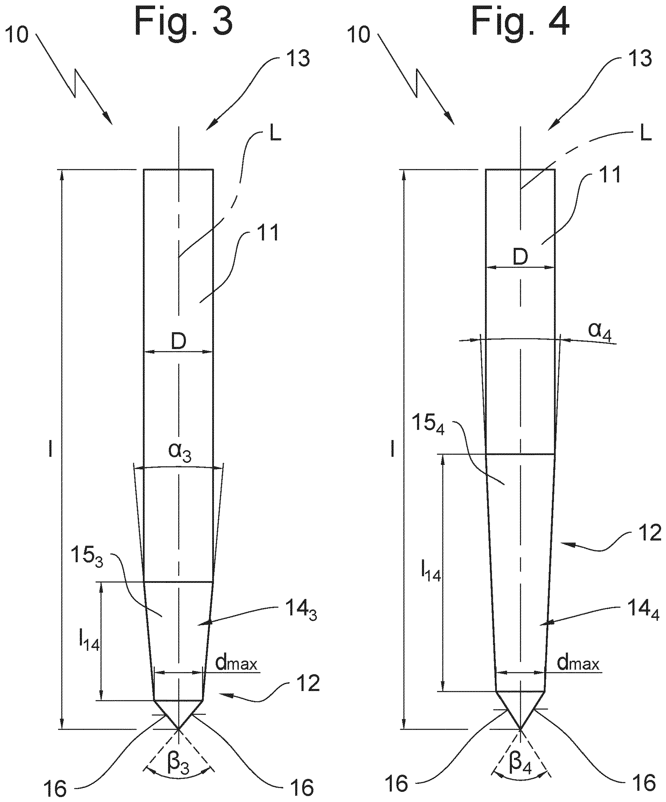

Gemäß der Ausführungsform Figur 3 verringert sich der Konuswinkel α₃ auf 10° und der Winkel β₃ auf 80°.

Letztlich zeigt die Figur 4 ein Befestigungselement 10, bei dem der Konuswinkel α₄ auf 5° und der Winkel β₄ auf 65° reduziert ist.

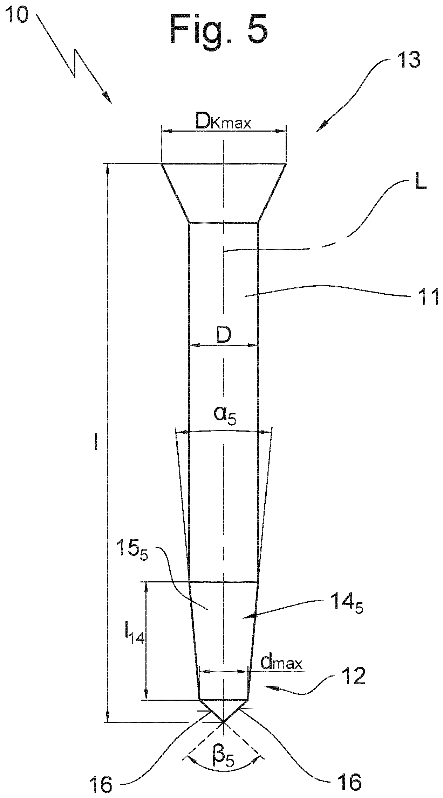

In der Ausführungsform gemäß Figur 5 ist das Befestigungselement 10 mit einem Kopf K dargestellt, der einen vergrößerten, maximalen Durchmesser D_{Kmax} aufweist, welcher sich in Richtung zum Schaft 11 umlaufend konisch verringert. Der Konuswinkel α₅ sowie der Winkel β₅ zwischen den Seitenflächen 16 des weiteren Segmentes 15 beträgt ebenso wie bei der Ausführungsform gemäß Figur 3 10° bzw. 95°.

### BEZUGSZEICHENLISTE

- 10: Befestigungselement
- 11: Schaft
- 12: sich verjüngender Bereich
- 13: freier Endbereich
- 14: konisch zulaufendes Segment
- 15: weiteres Segment
- 16: Seitenflächen

- α₁: Konuswinkel
- α₂: Konuswinkel
- α₃: Konuswinkel
- α₄: Konuswinkel
- α₅: Konuswinkel
- β₁: Winkel zwischen Seitenflächen
- β₂: Winkel zwischen Seitenflächen
- β₃: Winkel zwischen Seitenflächen
- β₄: Winkel zwischen Seitenflächen
- β₅: Winkel zwischen Seitenflächen
- D: Schaftdurchmesser
- DKmax: Kopfdurchmesser
- dₘₐₓ: maximaler Durchmesser von 15₁ - 15₅
- L: Längsmittelachse von 10
- l: Länge des Befestigungselements 10
- l₁₄: Länge des konisch zulaufenden Segments

## Patentansprüche

1. Befestigungselement (10) aus Holz und/oder Holzwerkstoffen zum Verbinden von mindestens zwei, wenigstens teilweise aus Holz bestehenden Bauteilen, bestehend aus einem Schaft (11) und einem wenigstens teilweise am Schaft angeordneten sich verjüngenden Bereich (12), wobei der sich verjüngende Bereich (12) aus mindestens einem konisch zulaufenden Segment (14₁ - 14₅) und einem eine Spitze ausbildenden, an das konisch zulaufende Segment sich anschließenden weiteren Segment (15₁ - 15₅) gebildet wird, wobei umlaufende Seitenflächen (16) der Spitze im Winkel von 65 bis 110 ° , bevorzugt im Winkel von 65 bis 95°, zueinanderstehen.

2. Befestigungselement nach Anspruch 1, dass die Konizität des konisch zulaufenden Segmentes (15₁ - 15₅) zwischen 5 und 20° zur Längsmittelachse (L) des Befestigungselementes (10) beträgt.

3. Befestigungselement nach Anspruch 1 oder 2, **dadurch gekennzeichnet, dass** der maximale Durchmesser (dₘₐₓ) des eine Spitze aufweisenden Segmentes 0,7-fache (15₁ - 15₅) des Schaftdurchmessers (D) beträgt.

4. Befestigungselement nach einem der vorangehenden Ansprüche, **dadurch gekennzeichnet, dass** die Länge (l₁₄) des konisch zulaufenden Segments (14₁ - 15₅) des sich verjüngenden Bereichs (12) bei einer Länge des Befestigungselementes (10) von 50 mm zwischen 5 und 10 mm beträgt.

5. Befestigungselement nach einem der vorangehenden Ansprüche, **dadurch gekennzeichnet, dass** das Befestigungselement (10) einen Kopf (K) aufweist.

6. Befestigungselement (10) nach einem der vorhergehenden Ansprüche, **dadurch gekennzeichnet, dass** der Schaft (11) an seiner Mantelfläche mindestens teilweise mit einer in Längsrichtung (L) des Schaftes (11) verlaufenden Profilierung versehen ist.

7. Befestigungselement (10) nach Anspruch 6, **dadurch gekennzeichnet, dass** die Profilierung des Schaftes (11) wellenförmig ausgebildet ist.

8. Befestigungselement (10) nach einem der vorangehenden Ansprüche, **dadurch gekennzeichnet, dass** der Schaft (11) einschließlich des sich verjüngenden Endbereiches (12) aus verdichtetem Holz und/oder Holzwerkstoff gebildet wird.

9. Befestigungselement (10) nach einem der vorhergehenden Ansprüche, **dadurch gekennzeichnet, dass** der Schaft (11) einschließlich des sich verjüngenden Bereiches (12) aus extrudiertem, verdichtetem Holzwerkstoff gebildet wird.

10. Befestigungselement (10) nach einem der vorangehenden Ansprüche, **dadurch gekennzeichnet, dass** die Dichte des Holzes und/oder Holzwerkstoffes größer ist als 1,1 g/ cm³.

11. Befestigungselement (10) nach einem der vorhergehenden Ansprüche, **dadurch gekennzeichnet, dass** das Befestigungselement (10) zum Verbinden von nicht vorgelochten, wenigstens teilweise aus Holz bestehenden Bauteils verwendbar ist.

## Claims

1. Fastening element (10) made of wood and/or wood-based materials for connecting at least two components consisting at least partially of wood, said fastening element consisting of a shaft (11) and a narrowed region (12) disposed at least partially on the shaft, wherein the narrowed region (12) is formed from at least one conically tapering segment (14₁ - 14₅) and a further segment (15₁ - 15₅) that forms a tip and adjoins the conically tapering segment, wherein circumferential side faces (16) of the tip are at an angle of 65 to 110°, preferably at an angle of 65 to 95°, to one another.

2. Fastening element according to claim 1, that the conicity of the conically tapering segment (15₁ - 15₅) is between 5 and 20° with respect to the longitudinal centre axis (L) of the fastening element (10).

3. Fastening element according to claim 1 or 2, **characterised in that** the maximum diameter (dₘₐₓ) of the segment having a tip is 0.7 times (15₁ - 15₅) the shaft diameter (D).

4. Fastening element according to one of the preceding claims, **characterised in that** the length (l₁₄) of the conically tapering segment (14₁ - 15₅) of the narrowed region (12) is between 5 and 10 mm if the fastening element (10) has a length of 50 mm.

5. Fastening element according to one of the preceding claims, **characterised in that** the fastening element (10) has a head (K).

6. Fastening element (10) according to one of the preceding claims, **characterised in that** the shaft (11) is provided on its outer surface at least partially with a profiling extending in the longitudinal direction (L) of the shaft (11).

7. Fastening element (10) according to claim 6, **characterised in that** the profiling of the shaft (11) is corrugated.

8. Fastening element (10) according to one of the preceding claims, **characterised in that** the shaft (11), including the narrowed end region (12), is formed from compressed wood and/or wood-based material.

9. Fastening element (10) according to one of the preceding claims, **characterised in that** the shaft (11), including the narrowed region (12), is formed from extruded, compressed wood-based material.

10. Fastening element (10) according to one of the preceding claims, **characterised in that** the density of the wood and/or wood-based material is greater than 1.1 g/cm³.

11. Fastening element (10) according to one of the preceding claims, **characterised in that** the fastening element (10) can be used to connect non-pre-perforated components that consist at least partially of wood.

## Revendications

1. Elément de fixation (10) en bois et/ou en matériaux à base de bois pour l'assemblage d'au moins deux pièces composées au moins partiellement de bois, constitué d'un manche (11) et d'une zone effilée (12) agencée au moins partiellement sur le manche, laquelle zone effilée (12) est formée d'au moins un segment à effilement conique (14₁ - 14₅) et d'un autre segment (15₁ - 15₅) en forme de pointe se raccordant au segment à effilement conique, des surfaces latérales périphériques (16) de la pointe formant entre elles un angle de 65 à 110°, de préférence un angle de 65 à 95°.

2. Elément de fixation selon la revendication 1, charactérisé en ce que la conicité du segment (15₁ - 15₅) en forme de pointe est de 5 à 20° par rapport à l'axe central longitudinal (L) de l'élément de fixation (10).

3. Elément de fixation selon la revendication 1 ou 2, **caractérisé en ce que** le diamètre maximum (dₘₐₓ) du segment en forme de pointe est égal à 0,7 fois (15₁ - 15₅) le diamètre du manche (D).

4. Elément de fixation selon une des revendications précédentes, **caractérisé en ce que** la longueur (l₁₄) du segment à effilement conique (14₁ - 15₅) de la zone effilée (12) est de 5 à 10 mm pour une longueur de l'élément de fixation (10) de 50 mm.

5. Elément de fixation selon une des revendications précédentes, **caractérisé en ce que** cet élément de fixation (10) comporte une tête (K).

6. Elément de fixation (10) selon une des revendications précédentes, **caractérisé en ce que** le manche (11) est au moins partiellement doté sur sa surface extérieure d'un profilage courant dans la direction longitudinale (L) du manche (11).

7. Elément de fixation (10) selon la revendication 6, **caractérisé en ce que** le profilage du manche (11) est ondulé.

8. Elément de fixation (10) selon une des revendications précédentes, **caractérisé en ce que** le manche (11), y compris la zone effilée (12), est constitué de bois et/ou de matériau à base de bois compacté.

9. Elément de fixation (10) selon une des revendications précédentes, **caractérisé en ce que** le manche (11), y compris la zone effilée (12), est constitué de matériau à base de bois compacté extrudé.

10. Elément de fixation (10) selon une des revendications précédentes, **caractérisé en ce que** la densité du bois et/ou du matériau à base de bois est supérieure à 1,1 g/cm³.

11. Elément de fixation (10) selon une des revendications précédentes, **caractérisé en ce que** cet élément de fixation (10) peut être utilisé pour l'assemblage de pièces au moins partiellement constituées de bois non pré-percées.
